# EUROPÄISCHE PATENTSCHRIFT

(11) **EP 1 156 234 B1**
(45) Veröffentlichungstag und Bekanntmachung des Hinweises auf die Patenterteilung: **01.02.2006**
(21) Anmeldenummer: 01108832.5
(22) Anmeldetag: 09.04.2001
(51) Int. Cl.: F16H 59/00, G01L 3/10

(54) **Sensor**
Sensor
Senseur

(30) Priorität: 16.05.2000 DE 10024035
(43) Veröffentlichungstag der Anmeldung: 21.11.2001
(73) Patentinhaber: Sew-Eurodrive GmbH & Co. KG, 76646 Bruchsal (DE)
(72) Erfinder: Bader, Antonius, 76646 Bruchsal (DE)

(56) Entgegenhaltungen:
- EP-A- 0 675 364
- WO-A-00/26625
- DE-A- 4 333 199
- DE-C- 4 229 569
- DE-C- 4 430 503
- US-A- 5 184 069
- BALDAUF W: "FREQUENZANALOGE DREHMOMENTMESSUNG MIT OBERFLAECHENWELLEN- RESONATOREN" , TECHNISCHES MESSEN TM, R.OLDENBOURG VERLAG. MUNCHEN, DE, VOL. 58, NR. 9, PAGE(S) 329-334 XP000262330 ISSN: 0171-8096 * das ganze Dokument *

## Beschreibung

Die Erfindung betrifft einen Dichtring, ein Verfahren zur Prozesssteuerung, ein Verfahren zur Diagnose, und eine Baureihe.

Es sind verschiedene Systeme zur Messung physikalischer Größen bei einer drehbaren Welle bekannt. Zu den physikalischer Größen zählen beispielhaft die Querkraft und das Drehmoment, welche auf die drehbare Welle übertragen werden. Unter Querkraft wird in dieser Schrift die zur Achse der drehbaren Welle radial wirkende Kraftkomponente, also die Radialkraft, verstanden. Unter drehbarer Welle werden in dieser Schrift, soweit sinnvoll, immer auch in Verallgemeinerung drehende Teile verstanden.

Gemeinsam ist allen heutigen Systemen, dass sie aufwendig und kostspielig sind. Diejenigen Systeme, die einen oder mehrere Sensoren auf einer drehbaren Welle aufweisen, benötigen eine Energieversorgung für den sich mitdrehbaren Teil der Elektronik. Teilweise werden hierfür Batterien eingesetzt, die nach einer gewissen Betriebszeit ausgetauscht werden müssen und viel Platz benötigen. Außerdem benötigt der mitdrehbare Teil der Elektronik ebenfalls Platz. Hohe elektrische und/oder magnetische Felder können zusätzlich den Einsatz erschweren.

Aus der gattungsgemäßen WO 00/26625 A ist eine berührungslose Übertragung der bestimmten Messwerte für Drehmoment bekannt. Dabei, sind für die Antennen spezielle Drähte, Komponenten und Vorrichtungen notwendig. Die Montage jeder zusätzlichen Komponente ist aufwendig, kostspielig und benötigt ein höheres Lagervolumen

Der Erfindung liegt daher bezüglich eines solchen Systems die Aufgabe zugrunde, eine Komponente, insbesondere für ein Getriebe oder einen Motor, und ein Verfahren zur Prozesssteuerung weiterzubilden unter Vermeidung der vorgenannten Nachteile. Insbesondere soll die Komponente kostengünstig herstellbar sein, das Verfahren zur Prozesssteuerung mit wenigen zusätzlichen Bauteilen oder weniger Bauteilen auskommen, die Baureihe von Vorrichtungen, insbesondere Getrieben oder Motoren möglichst kostengünstig ausgeführt sein.

Erfindungsgemäß wird die Aufgabe
- bei dem Dichtring nach den in Anspruch 1 und
- bei dem Verfahren zur Prozesssteuerung nach den in Anspruch 3 und
- bei dem Verfahren zur Diagnose nach den in Anspruch 4 und
- bei der Baureihe nach den in Anspruch 6 angegebenen Merkmalen gelöst.
Wesentliche Merkmale der Erfindung bei dem Dichtring sind, dass der Dichtring als Bauteil eine Zugfeder aufweist, die als stationäre Antenne ausgebildet ist,
wobei zumindest eine mitdrehbare Antenne zum Senden und/oder Empfangen von Hochfrequenz mit dem Dichtring ausgebildet ist,
wobei die mitdrehbare Antenne derart gestaltet ist, dass das Senden und/oder Empfangen von Hochfrequenz zumindest für die Übertragung von Energie zur Versorgung eines mitdrehbaren, elektrisch mit der mitdrehbaren Antenne verbundenen Sensors ausführbar ist,
und dass die stationäre Antenne derart gestaltet ist, dass das Senden und/oder Empfangen von Hochfrequenz für die Übertragung von Information zumindest von einer mit der stationären Antenne elektrisch verbundenen ersten elektronischen Schaltung ausführbar ist,
und wobei mittels des Sensors aufgenommene Messwerte physikalischer Größen zur Information gehören.

Von Vorteil ist dabei, dass Energie und Information über Messwerte berührungslos übertragbar sind und der Dichtring als Komponente kostengünstig herstellbar ist. Außerdem ist die Lösung durch das Kombinieren und Zusammenfassen der Komponente mit der Antenne kompakt und platzsparend. Ein weiterer wesentlicher Vorteil ist, dass der Einsatz der Erfindung ohne oder ohne wesentliche Änderung oder Umkonstruktion bestehender Bauteile ausführbar ist, da eine oder mehrere Komponenten der sowieso vorhandenen Baureihe nur durch eine spezielle erfindungsgemäße Komponente ersetzt werden müssen. Insbesondere ist keine Maßänderung wesentlicher Komponenten nötig wegen der erwähnten Integration und Kompaktheit.

Darüber hinaus benötigt der mitdrehende Sensor vorteilhafterweise keinen wesentlichen Energiespeicher, wie Batterie oder dergleichen, da die Energie an ihn mittels der mitdrehbaren Antenne übertragen wird. Da kein Kontakt, also eine räumliche Trennung, zwischen stationärer und mitdrehbarer Antenne vorhanden ist, ist die Erfindung auch bei Vorhandensein großer elektrischer Feldstärken und bei geeigneter Ausführung des Sensors auch bei Vorhandensein großer magnetischer Feldstärken einsetzbar. Bei geeigneter Ausführung der erfindungsgemäßen Komponente ist sogar eine spezielle Antenne jeweils verzichtbar, insbesondere ist dies dann der Fall, wenn ein metallisches Teil von einer isolierenden Schicht oder dergleichen umgeben ist. Ein weiterer Vorteil ist die durch Luft und/oder die isolierenden Schichten erreichbare Potentialtrennung.

Wesentliche Merkmale der Erfindung bei dem Verfahren sind, dass an einem Antrieb, umfassend Getriebe und Motor, mindestens eine physikalische Größe, wie Drehmoment, Querkraft oder dergleichen, an einem drehbaren Teil, wie Welle oder dergleichen, mittels eines sich mitdrehbaren Sensors gemessen wird,
wobei der Getriebe und Motor Komponenten umfassen, zu denen mindestens ein Lager, ein Dichtring, ein Sicherungsring und ein Gehäuse gehören und die jeweils aus einem oder mehreren Teilen, insbesondere metallischen und/oder elektrisch isolierenden Teilen, zusammengesetzt sind,
- der Sensor berührungslos mit Energie zur Durchführung des Messvorgangs versorgt wird,
- das Messergebnis als Information berührungslos zumindest vom Sensor an eine stationäre erste elektronische Schaltung mit Antenne übertragen wird,
- und der Prozess in Abhängigkeit von dieser Messung beeinflusst und/oder gesteuert wird,
- und mindestens eine Komponente oder ein Teil derselben als Antenne oder zumindest als Teil einer Antenne zum Senden und/oder Empfangen von Hochfrequenz verwendet wird.

Von Vorteil ist dabei ebenfalls, dass Energie und Information über Messwerte berührungslos übertragbar sind und der Sensor kostengünstig herstellbar ist. Außerdem ist die Lösung durch das Kombinieren und Zusammenfassen der Komponente mit der Antenne kompakt und platzsparend. Darüber hinaus benötigt der mitdrehende Sensor keinen wesentlichen Energiespeicher, wie Batterie oder dergleichen, da die Energie an ihn über die mitdrehbare Antenne übertragen wird. Da kein Kontakt, also eine räumliche Trennung, zwischen stationärer und mitdrehbarer Antenne vorhanden ist, ist die Erfindung auch bei Vorhandensein großer elektrischer Feldstärken und bei geeigneter Ausführung des Sensors auch bei Vorhandensein großer magnetischer Feldstärken einsetzbar. Bei geeigneter Ausführung der Erfindung ist sogar eine spezielle Antenne jeweils verzichtbar, insbesondere ist dies dann der Fall, wenn ein metallisches Teil von einer isolierenden Schicht oder dergleichen umgeben ist. Des Weiteren kommt das Verfahren mit wenigen zusätzlichen Bauteilen oder weniger Bauteilen aus.

Von Vorteil ist bei dem erfindungsgemäßen Dichtring auch, dass er sowieso vorhanden ist und dicht an der drehenden Welle positioniert ist. Somit ist eine besonders gute Übertragung und elektromagnetische Ankoppelung der stationären zur mitdrehbaren Antenne ermöglicht. Außerdem ist durch eine derartige Positionierung der Antenne entweder ein direkter Zugang zum vom Gehäuse und der Welle gebildeten Innenraum oder Halbraum den elektromagnetischen Wellen ermöglicht. Dies bedeutet insbesondere, dass keine Bohrung durchs Gehäuse angesetzt werden muss. Außerdem muss auch nicht eine Antenne durch einen Gehäusedeckel oder Ähnliches geführt werden.

Bei einer weiteren vorteilhaften Ausgestaltung weist der Dichtring ein Bauteil, wie Zugfeder, Versteifungsring oder dergleichen, auf, das als Antenne ausgebildet ist. Von Vorteil ist dabei, dass eine metallische Komponente, die in oder auf einen elektrisch isolierenden Stoff gebettet oder angeordnet ist, verwendbar ist. Außerdem liegt die Komponente zwischen dem Gehäuse, das mittels des Dichtrings gegen die Welle abgedichtet wird, und der Welle. Somit werden von der Antenne abgestrahlte elektromagnetische Wellen in diesem Raumbereich zwischen Gehäuse und Welle verbreitet. Bei manchen Anwendungen, insbesondere im Fall der Ausführung der Welle als Zwischenwelle, ist dieser Raumbereich geschlossen, was die Ausbreitung der Wellen bei geeigneter Wahl der Hochfrequenz begünstigt.

Bei einer weiteren vorteilhaften Ausgestaltung ist der Dichtring zur Durchführung des von der Antenne herführenden oder für die Antenne bestimmten elektrischen Stromes ausgebildet. Von Vorteil ist dabei, dass keine zusätzliche Kabeldurchführung notwendig ist und die aufgezeigte erfindungsgemäße Durchführung dicht ist oder in hoher Schutzart ausführbar ist.

Bei einer weiteren vorteilhaften Ausgestaltung ist mindestens eine Anschlussleitung zum elektrischen Verbinden der ersten elektronischen Schaltung mit der Antenne in eine Komponente, insbesondere dem Dichtring, eingespritzt. Von Vorteil ist dabei, dass bei der Herstellung der Komponente, insbesondere des Dichtrings, mittels eines Spritzgussverfahrens die Anschlussleitung in einfacher und kostengünstiger Weise umspritzt wird. Somit ist eine elektrische Verbindung zur Antenne geschaffen, die in hoher Schutzart ausgeführt ist und kostengünstig herstellbar ist. Außerdem benötigt sie keinen wesentlichen zusätzlichen Raum und kann in die Komponente völlig integriert werden. Ein weiterer Vorteil ist die somit erreichte elektrische Isolierung der Anschlussleitung.

Bei einer weiteren vorteilhaften Ausgestaltung ist die Antenne im Außenring des Lagers integriert. Von Vorteil ist dabei, dass ein sowieso im Antrieb vorhandenes Teil verwendbar ist und die Lösung äußerst kompakt ist und einen geringen Raumbedarf aufweist.

Bei einer weiteren vorteilhaften Ausgestaltung ist die mitdrehbare Antenne im Innenring des Lagers integriert. Die Vorteile entsprechen den vorgenannten. Bei keramischer Ausführung des Lagers ergibt sich eine besonders gute elektromagnetische Ankoppelung der stationären Antenne an die mitdrehbare Antenne.

Bei einer besonders vorteilhaften Ausgestaltung ist die mitdrehbare Antenne im Innenring des Lagers derart integriert und die Antenne im Außenring des Lagers derart integriert, dass sie sich möglichst direkt gegenüberstehen und somit eine gute Ankopplung und verbesserte Übertragung ausführbar ist.

Bei einer weiteren vorteilhaften Ausgestaltung ist eine stationäre Antenne oder mindestens ein Teil einer stationären Antenne im Versteifungsring eines Dichtrings integriert, der Versteifungsring wird also als stationäre Antenne verwendet. Von Vorteil ist dabei, dass ein bei den meisten Dichtringen vorhandenes Teil verwendbar ist. Ein weiterer Vorteil ist, dass die Antenne einfach durch Umspritzung kostengünstig herstellbar ist. Des Weiteren ist die Antenne besonders durch das Material des Mantels des Dichtrings von Öl, Schmutz und/oder anderen aggressiven Stoffen ferngehalten und geschützt, insbesondere gegen Korrosion, Zersetzung oder dergleichen. Ein weiterer Vorteil ist, dass die Antenne einfach durch Umspritzung kostengünstig herstellbar ist.

Bei einer weiteren vorteilhaften Ausgestaltung ist die mitdrehbare Antenne elektrisch mit einem OFW-Sensor verbunden und auf einer drehbaren Welle direkt oder integriert in eine sich mit der Welle drehenden Komponente montiert und die stationäre Antenne ist elektrisch mit einer ersten elektronischen Schaltung verbunden und in eine Komponente integriert, die zum Senden und/oder Empfangen von Hochfrequenz, insbesondere 100 MHz bis 10 GHz, geeignet ausgeführt ist. Von Vorteil ist dabei, dass insbesondere der OFW-Sensor bei hohen elektrischen und magnetischen Feldstärken in seiner Umgebung verwendbar ist. Außerdem arbeitet die Energie- und Informationsübertragung berührungslos. Somit sind physikalische Größen sowohl bei nichtdrehender als auch bei drehender Welle verwendbar.

Bei einer weiteren vorteilhaften Ausgestaltung des Verfahrens ist die erste elektronische Schaltung über einen Feldbus mit weiteren elektronischen Schaltungen und/oder Feldbus teilnehmen, wie Zentralrechner oder dergleichen, verbunden. Von Vorteil ist dabei, dass die Informationen über die Messwerte an weitere Vorrichtungen gemeldet werden und somit Notabschaltungen oder andere Änderungen veranlassbar sind. Insbesondere sind die Messwerte zum Steuern und/oder Regeln des Prozesses verwendbar. Statt Feldbus sind auch ähnliche Systeme zur Informationsübertragung zwischen mehreren Teilnehmern verwendbar.

Bei einer weiteren vorteilhaften Ausgestaltung wird eine Notabschaltung bei Überschreitung kritischer Werte der physikalischen Größe ausgelöst. Von Vorteil ist dabei, dass abhängig von Werten physikalischer Größen, wie beispielsweise das auf die Welle übertragenen Drehmoment, der Prozess steuerbar oder regelbar, insbesondere abschaltbar, ist.

Von Vorteil ist bei der Baureihe von Vorrichtungen, dass die Baureihe in zumindest einer Baugröße Vorrichtungen umfasst, deren Komponenten zumindest teilweise durch vorgenannte Komponenten ersetzt sind. Somit können die Standard-Komponenten beispielsweise eines Getriebes einfach ersetzt werden und es müssen keine wesentlich höheren Lagerbestände aufgebaut werden.

In Weiterbildung ist bei mehreren Baugrößen dieselbe Axialbohrung, dasselbe Zwischenstück und/oder derselben Sensor einsetzbar. Dadurch ist eine besonders kostengünstige Fertigung ermöglicht.

Weitere vorteilhafte Ausgestaltungen ergeben sich aus den Unteransprüchen.

### Bezugszeichenliste

- 1: Dichtringmantelfläche
- 2: erste Zugfeder
- 3: Isolationskomponente
- 4: zweite Zugfeder
- 5: Dichtkante
- 6: erster Anschluss
- 7: zweiter Anschluss
- 21: Dichtringmantelfläche
- 22: Zugfeder
- 23: Dichtkante
- 24: erster Anschluss
- 25: zweiter Anschluss
- 26: Isolationskomponente
- 31: Dichtringmantelfläche
- 32: Zugfeder
- 33: Dichtkante
- 34: Isolationskomponente
- 35: Anschluss
- 41: Dichtringmantelfläche
- 42: Zugfeder (als Antenne)
- 43: Dichtkante
- 44: Anschluss
- 51: Dichtringmantelfläche
- 52: Versteifungsring
- 53: Zugfeder
- 54: Dichtkante
- 55,56: Anschluss
- 60: Abtriebswelle
- 61: Sensorpatrone
- 62: Dichtring
- 63: Anschluss
- 64: mitdrehbare Antenne
- 65: Verbindungsleitung
- 66: Lager
- 67: Gehäuse
- 71: Abtriebswelle
- 72: Dichtring
- 73: Gehäuse
- 74: Sicherungsring
- 75: Lager
- 76: Leitung
- 77: Leitung
- 78: Sensor
- 81: Lageraußenring
- 82: stationäre Antenne
- 83: Lagerkugel
- 84: Lagerinnenring
- 85: mitdrehbare Antenne

Die Erfindung wird nun anhand von Abbildungen näher erläutert:
Figur 1a zeigt eine Prinzipdarstellung eines erfindungsgemäßen Dichtrings mit doppelt geteilter Antenne und zwei Anschlüssen. Figur 1b zeigt eine zugehörige Schnittansicht.
Figur 2a zeigt eine Prinzipdarstellung eines erfindungsgemäßen Dichtrings mit einfach geteilter Antenne und zwei Anschlüssen. Figur 2b zeigt eine zugehörige Schnittansicht.
Figur 3a zeigt eine Prinzipdarstellung eine erfindungsgemäßen Dichtrings mit einfach geteilter Antenne und einem Anschluss. Figur 3b zeigt eine zugehörige Schnittansicht.
Figur 4a zeigt eine Prinzipdarstellung eines erfindungsgemäßen, Dichtrings mit ungeteilter Antenne und einem Anschluss. Figur 4b zeigt eine zugehörige Schnittansicht.
Figur 5a zeigt eine Prinzipdarstellung eines erfindungsgemäßen Dichtrings mit Antenne in Versteifungsring und Zugfeder. Figur 5b zeigt eine zugehörige Schnittansicht.
Figur 6 zeigt einen erfindungsgemäßen Dichtring mit Antenne bei einer drehbaren Welle.
Figur 7 zeigt ein erfindungsgemäßes Lager zur Führung einer drehbaren Welle im Gehäuse.
Figur 8 zeigt das Lager in zugehöriger Vergrößerung.

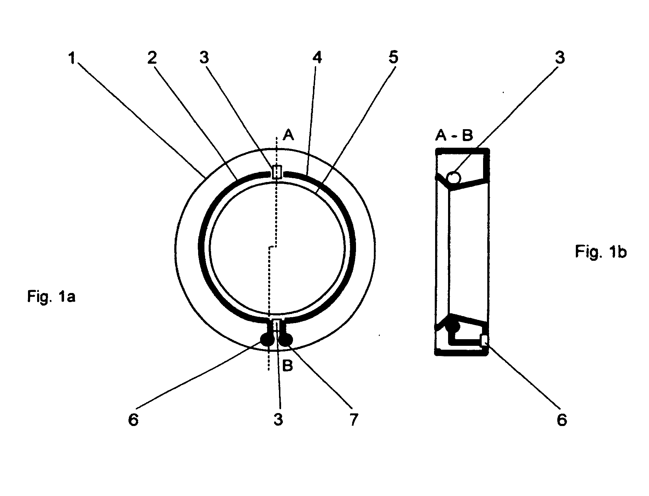

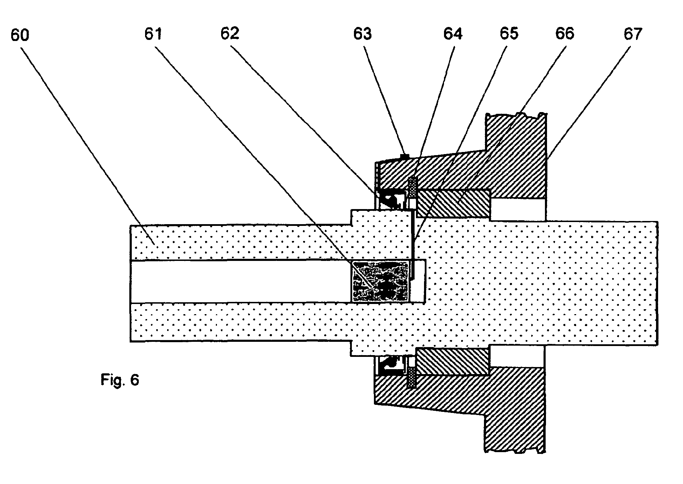

In der Figur 6 ist für ein erfindungsgemäßes Ausführungsbeispiel die drehbare Welle als Abtriebswelle 60 eines Getriebes mit Getriebegehäuse 67 ausgeführt, wobei die Abtriebswelle 60 vom Lager 66 gestützt ist. Ein Sensor ist mittels einer Sensorpatrone 61 in eine Axialbohrung der Abtriebswelle 60 eingebracht, wobei die Sensorpatrone 61 eingeklebt ist. Elektrisch wird der Sensor mit der mitdrehbaren Antenne 64 mit Hilfe einer Verbindungsleitung 65 verbunden. Die Verbindungsleitung 65 wird dabei durch eine kleine radiale Bohrung geführt. Die stehende, also stationäre, Antenne ist im Dichtring 62 integriert und mittels ihrer Anschlussleitung mit dem Anschluss 63 verbunden. Dabei ist die Integration insbesondere durch Verwendung der Zugfeder des Dichtring 62 als Antenne ausgeführt. In den Figuren 1 bis 5 ist für verschiedene erfindungsgemäße Ausführungsbeispiele die Ausführung der jeweiligen Zugfeder deutlicher gezeigt.

Bei einem ersten erfindungsgemäßen Ausführungsbeispiel wird als Sensor in der Sensorpatrone 61 ein Transponder eingesetzt. Bei einem solchen System sendet die erste stationäre elektronische Schaltung einen hochfrequenten elektromagnetischen Wellenzug, der über die Zugfeder 62 im Dichtring abgestrahlt wird und von der mitdrehbaren Antenne 64 empfangen wird. Unter Wellenzug wird in dieser Schrift immer auch eine Pulsfolge verstanden

Der Transponder weist eine weitere elektronische Schaltung auf, die ihre Versorgungsenergie aus dem genannten Wellenzug bezieht. Außerdem umfasst diese weitere elektronische Schaltung mindestens einen hochintegrierten Chip, wie Mikroprozessor oder dergleichen, an den kleinste Messfühler, wie Piezoelemente oder Dehnungsmessstreifen oder dergleichen, zur Messung physikalischer Größen angeschlossen sind. Die weitere elektronische Schaltung sendet nach dem Beginn des Eintreffens des beschriebenen Wellenzuges einen Wellenzug zurück, der derart moduliert und/oder codiert ist, dass Informationen über die von den Messfühlern aufgenommenen Werte der physikalischen Größen von der ersten elektronischen Schaltung empfangen und bearbeitet werden können.

Als physikalische Größen werden insbesondere die an der drehbaren Welle auftretende Querkraft und/oder das an die Welle übertragene Drehmoment erfasst.

Vorteilhaft ist bei dem Einsatz der genannten Transponder, dass die Hochfrequenz fast beliebig wählbar ist, insbesondere sind Transponder im erfindungsgemäßen System mit Frequenzen von 100kHz oder auch bis 10 GHz einsetzbar.

Bei weiteren erfindungsgemäßen Ausführungsbeispielen sind auch Transponder einsetzbar, bei denen verschiedene Frequenzen für Energie- und Informationsübertragung verwendet werden. Somit stören sich die zugehörigen Wellen nicht und es ist sogar eine im Wesentlichen gleichzeitige Energieübertragung zum Transponder und Informationsübertragung vom und/oder zum Transponder ausführbar.

Bei einem zweiten erfindungsgemäßen Ausführungsbeispiel wird als Sensor kein Transponder verwendet, sonder ein Oberflächenwellen-Sensor (OFW-Sensor). Dabei liegt die von der ersten elektronischen Schaltung über die Außenantenne im Dichtring 62 ausgestrahlte Hochfrequenz im Bereich von etwa 3 GHz. Es sind aber auch Frequenzen von 100 MHz bis 10 GHZ einsetzbar. Der über die mitdrehbare Antenne 64 empfangene Wellenzug wird als elektrische Spannung an Piezoelemente angelegt, die dann im Takt des Wellenzuges sich verändern oder schwingen. Die Piezoelemente sind auf einem Plättchen aufgebracht und erzeugen somit Oberflächenwellen die bis zu ebenfalls auf dem Plättchen aufgebrachten Reflektoren laufen und dort dann reflektiert werden. Die reflektierten Teile treffen zumindest teilweise wieder auf die Piezoelemente, die somit wieder diese akustischen Oberflächenwellen in elektrische Spannungen umwandeln. Somit wird sozusagen ein jeweils einem Reflektor zugeordneter Wellenzug zurückgestrahlt. Über die Außenantenne im Dichtring 62 empfängt die erste elektronische Schaltung das Signal und verarbeitet die Informationen, die mittels der Echos an sie übertragen werden.

Da die Laufzeit der akustischen Oberflächenwellen von physikalischen Größen, wie Temperatur und Spannungszuständen des Plättchens abhängt, sind durch geeignete Anordnung der Reflektoren Informationen über Stauchung und Dehnung in verschiedenen Richtungen des Plättchens zugänglich und messbar. Das genannte Drehmoment und die genannte Querkraft sind aus solchen Informationen von der ersten elektronischen Schaltung bestimmbar.

Figur 1a zeigt eine Prinzipdarstellung eines erfindungsgemäßen Dichtrings mit doppelt geteilter Antenne und zwei Anschlüssen. Figur 1 b zeigt eine zugehörige Schnittansicht. Die Dichtringmantelfläche 1 weist den größten Durchmesser auf. Im Dichtring befinden sich eine erste Zugfeder 2 und eine zweite Zugfeder 4, wobei diese beiden Zugfedern 2, 4 durch eine Isolationskomponente 3 elektrisch getrennt sind. Die Zugfedern drücken nach Aufbringen des Dichtrings auf eine Welle die Dichtkante 5 auf diese. Ein erster Anschluss 6 und ein zweiter Anschluss 7 dienen zum Anschließen der schon beschriebenen ersten elektronischen Schaltung.

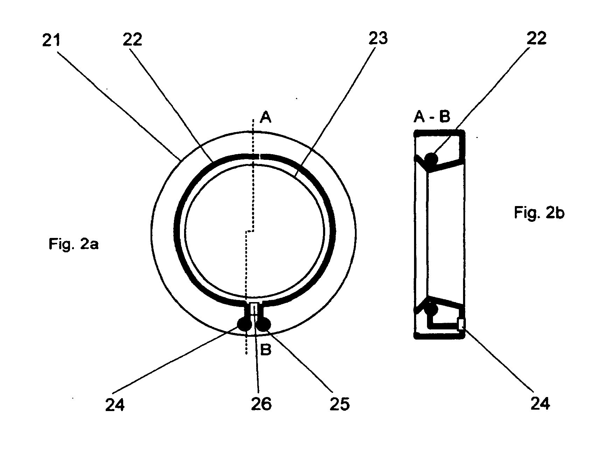

Figur 2a zeigt eine Prinzipdarstellung eines erfindungsgemäßen Dichtrings mit einfach geteilter Antenne und zwei Anschlüssen. Figur 2b zeigt eine zugehörige Schnittansicht. Die Dichtringmantelfläche 21 weist wiederum den größten Durchmesser auf. Im Dichtring befinden sich eine Zugfeder 22. Die Zugfeder 22 drückt nach Aufbringen des Dichtrings auf eine Welle die Dichtkante 23 auf diese. Ein erster Anschluss 24 und ein zweiter Anschluss 25 sind durch die Isolationskomponente 26 elektrisch isoliert und dienen zum Anschließen der schon beschriebenen ersten elektronischen Schaltung.

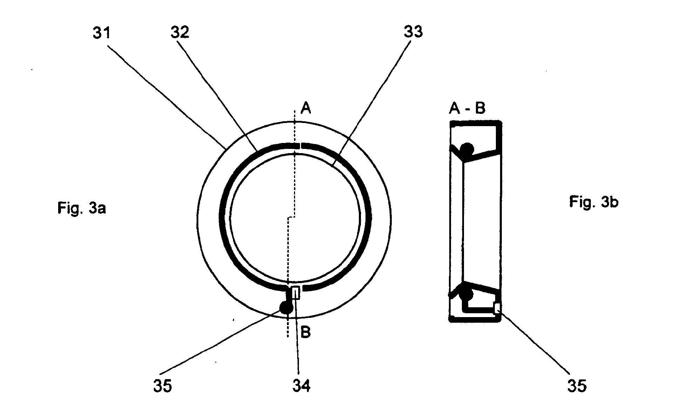

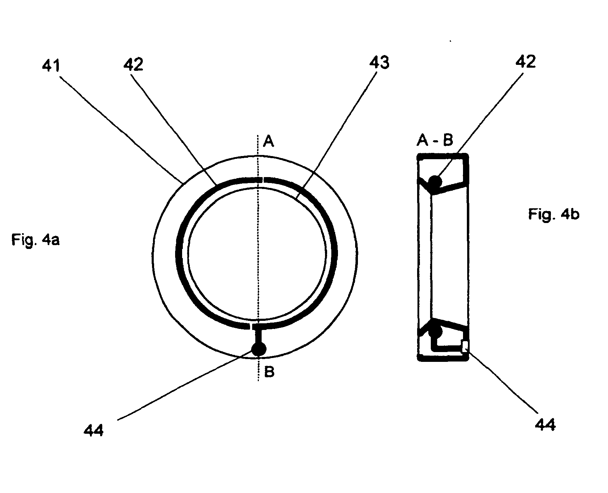

Figur 3a zeigt eine Prinzipdarstellung eines erfindungsgemäßen Dichtrings mit einfach geteilter Antenne und einem Anschluss. Figur 3b zeigt eine zugehörige Schnittansicht. Die Dichtringmantelfläche 31 weist wiederum den größten Durchmesser auf. Im Dichtring befinden sich eine Zugfeder 32. Die Zugfeder 32 drückt nach Aufbringen des Dichtrings auf eine Welle die Dichtkante 33 auf diese. Ein Anschluss 35 ist mit dem einen Ende der Zugfeder 32 verbunden und vom anderen Ende der Zugfeder 32 mittels der Isolationskomponente 34 elektrisch isoliert. Die Figur 4a und Figur 4b unterscheiden sich von den entsprechenden Figuren 3a und 3b darin, dass die Isolationskomponente 34 fehlt und die Zugfeder 42 geschlossen ist.
Dichtringmantelfläche 41, Dichtkante 43 entsprechen den aus den Figuren 3a und 3b bekannten. Der Anschluss 44 ist mit der Zugfeder 42 elektrisch verbunden.

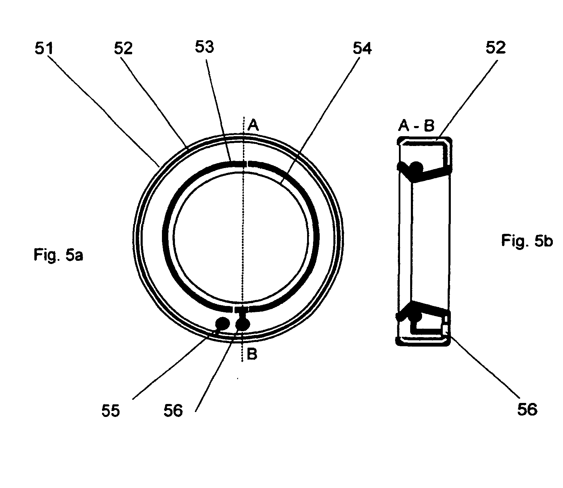

Figur 5a zeigt eine Prinzipdarstellung eines erfindungsgemäßen Dichtrings mit Versteifungsring als Antenne und Zugfeder als Antenne. Figur 5b zeigt eine zugehörige Schnittansicht. Die Dichtringmantelfläche 51 weist wiederum den größten Durchmesser auf.
Im Dichtring befinden sich eine Zugfeder 53, die als erste Antenne ausgebildet ist. Der metallische Versteifungsring 52 ist als zweite Antenne ausgeführt. Die Zugfeder 53 drückt nach Aufbringen des Dichtrings auf eine Welle die Dichtkante 54 auf diese. Ein Anschluss 56 ist elektrisch mit der Zugfeder 53 verbunden. Ein Anschluss 55 ist elektrisch mit dem Versteifungsring 52 verbunden.

Bei allen in den Figuren 1 bis 5 gezeigten Ausführungsbeispielen ist die drehbare Antenne in geeigneter Art derart ausgeführt, dass die dortigen drehbaren Antennen elektrotechnisch optimal zu den stationären Antennen der Figuren 1 bis 5 zur Energie- und Informationsübertragung passen. Insbesondere ist die geometrische Ausführungsform geeignet für die jeweiligen verwendeten Frequenzen und die Abstände zwischen stationären und mitdrehbaren Antennen.

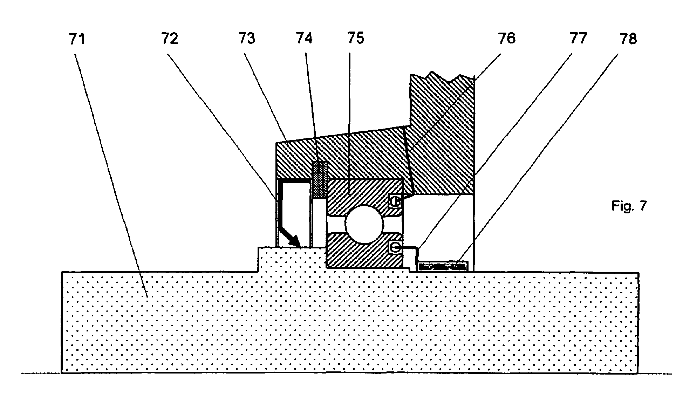

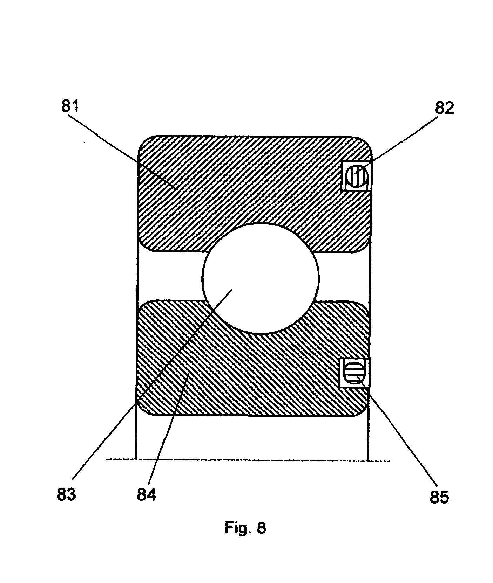

Figur 7 zeigt ein erfindungsgemäßes Lager zur Führung einer drehbaren Welle im Gehäuse. Figur 8 zeigt das Lager in zugehöriger Vergrößerung. Die Abtriebswelle 71 ist zum Gehäuse 73 hin mittels des Dichtrings 72 abgedichtet und vom Lager 75 geführt. Der Sicherungsring 74 sichert die axiale Position des Lagers 75 ab. Der Sensor 78 ist auf der Abtriebswelle 71 angebracht und mit der Leitung 77 mit der mitdrehbaren Antenne 85 im Lagerinnenring 84 verbunden. Die metallische Lagerkugel 83 befindet sich zwischen Lageraußenring 81 und Lagerinnenring 84. Bei weiteren erfindungsgemäßen Ausführungsbeispielen sind die Lagerkugeln 83 keramisch ausgeführt. Im Lageraußenring 81 ist eine stationäre Antenne 82 integriert, die mit der Leitung 77 mit der ersten elektrischen Schaltung verbindbar ist.

Die Isolationskomponenten 3, 26, 34 weisen jeweils nicht nur die Funktion der mechanischen Verbindung der Zugfederteile sondern auch die Funktion der elektrischen Trennung auf.

Bei weiteren erfindungsgemäßen Ausführungsbeispielen wird die Antenne durch einen in die Komponenten, insbesondere einen Dichtring, integrierten oder eingebauten Zusatzdraht gebildet. Somit liegt eine einfach ausführbare Antenne vor, die kostengünstig herstellbar ist.

In weiteren erfindungsgemäßen Ausführungsbeispielen werden Antennen nicht nur in Komponenten, wie Dichtring, Lager oder dergleichen, integriert sondern auch in andere Komponenten. Beispielhaft sei hierbei der Sicherungsring 74 erwähnt.

In weiteren erfindungsgemäßen Ausführungsbeispielen ist der in dieser Schrift jeweils erwähnte stationäre Teil, also beispielsweise auch das Gehäuse des Getriebes und des Motors, der gegenüber dem Bezugssystem der Umgebung drehende Teil. Die in dieser Schrift genannten drehenden Teile sind dann gegenüber dem Bezugssystem der Umgebung ruhend. Die Erfindung bezieht sich auch auf diese Analoga und allgemein auf alle Vorrichtungen, die durch Transformationen, insbesondere Dreh-Transformationen, von Bezugssystemen beschreibbar sind. Insbesondere gehören dazu auch Außenläufermotoren.

## Patentansprüche

1. Dichtring, insbesondere für ein Getriebe oder einen Motor,
wobei der Dichtring als Bauteil eine Zugfeder aufweist, die als stationäre Antenne ausgebildet ist,
wobei zumindest eine mitdrehbare Antenne zum Senden und/oder Empfangen von Hochfrequenz mit dem Dichtring ausgebildet ist,
wobei die mitdrehbare Antenne derart gestaltet ist, dass das Senden und/oder Empfangen von Hochfrequenz zumindest für die Übertragung von Energie zur Versorgung eines mitdrehbaren, elektrisch mit der mitdrehbaren Antenne verbundenen Sensors ausführbar ist,
und dass die stationäre Antenne derart gestaltet ist, dass das Senden und/oder Empfangen von Hochfrequenz für die Übertragung von Information zumindest von einer mit der stationären Antenne elektrisch verbundenen ersten elektronischen Schaltung ausführbar ist,
und wobei mittels des Sensors aufgenommene Messwerte physikalischer Größen zur Information gehören.

2. Dichtring nach Anspruch 1,
**dadurch gekennzeichnet, dass**
die mitdrehbare Antenne elektrisch mit einem OFW-Sensor verbunden ist und auf einer drehbaren Welle direkt oder integriert in eine sich mit der Welle drehenden Komponente montiert ist und
die stationäre Antenne elektrisch mit einer ersten elektronischen Schaltung verbunden und in eine Komponente integriert ist, die zum Senden und/oder Empfangen von Hochfrequenz, insbesondere 100MHz bis 10 GHz, geeignet ausgeführt ist,

3. Verfahren zur Prozesssteuerung,
**dadurch gekennzeichnet, dass**
an einem Antrieb, umfassend Getriebe und Motor, mindestens eine physikalische Größe, wie Drehmoment, Querkraft oder dergleichen, an einem drehbaren Teil, wie Welle oder dergleichen, mittels eines sich mitdrehbaren Sensors gemessen wird,
wobei der Antrieb mindestens einen Dichtring nach Anspruch 1 umfasst, der aus mehreren Teilen, insbesondere metallischen und/oder elektrisch isolierenden Teilen, zusammengesetzt ist,
wobei
- der Sensor berührungslos mit Energie zur Durchführung des Messvorgangs versorgt wird,
- das Messergebnis als Information berührungslos zumindest vom Sensor an eine stationäre erste elektronische Schaltung mit Antenne übertragen wird,
- der Prozess in Abhängigkeit von dieser Messung beeinflusst und/oder gesteuert wird
- und mindestens eine Komponente oder ein Teil derselben als Antenne oder zumindest als Teil einer Antenne zum Senden und/oder Empfangen von Hochfrequenz verwendet wird.

4. Verfahren zur Diagnose,
**dadurch gekennzeichnet, dass**
an einem Antrieb, umfassend Getriebe und Motor, mindestens eine physikalische Größe, wie Drehmoment, Querkraft oder dergleichen, an einem drehbaren Teil, wie Welle oder dergleichen, mittels eines sich mitdrehbaren Sensors gemessen wird,
wobei der Antrieb mindestens einen Dichtring nach Anspruch 1 umfasst, der aus mehreren Teilen, insbesondere metallischen und/oder elektrisch isolierenden Teilen, zusammengesetzt ist,
wobei
- der Sensor berührungslos mit Energie zur Durchführung des Messvorgangs versorgt wird,
- das Messergebnis als Information berührungslos zumindest vom Sensor an eine stationäre erste elektronische Schaltung mit Antenne übertragen wird,
- und die Messdaten zur Diagnose und/oder zur von den Messdaten abhängigen Ansteuerung von Mitteln zur Anzeige verwendet werden,
- und mindestens eine Komponente oder ein Teil derselben als Antenne oder zumindest als Teil einer Antenne zum Senden und/oder Empfangen von Hochfrequenz verwendet wird.

5. Verfahren nach mindestens einem der Ansprüche 3 oder 4,
**dadurch gekennzeichnet, dass**
die erste elektronische Schaltung über einen Feldbus und/oder ein anderes der Vernetzung mehrerer Teilnehmer dienendes System mit weiteren elektronischen Schaltungen und/oder Teilnehmern oder Feldbusteilnehmern, wie Zentralrechner oder dergleichen, verbunden ist, wobei eine Notabschaltung bei Überschreitung kritischer Werte der physikalischen Größe ausgelöst wird.

6. Baureihe von Vorrichtungen, insbesondere von Getrieben oder Motoren,
mit zumindest einem drehenden Teil, insbesondere einer drehenden Welle,
wobei die Baureihe mindestens zwei Baugrößen umfasst,
**dadurch gekennzeichnet, dass**
die Baureihe in zumindest einer Baugröße Vorrichtungen umfasst, von deren zumindest einem Wellendichtring zumindest einer durch einen Wellendichtring nach Anspruch 1 ersetzt ist,
in mindestens zwei Baugrößen der Baureihe der selbe Wellendichtring einsetzbar ist oder dieser
- dieselbe Antenne,
- dieselbe Zugfeder,
- denselben Versteifungsring,
- oder dieselben Anschlussleitungen
aufweist.

## Claims

1. A sealing ring, particularly for a gear or a motor,
wherein a component of the sealing ring is a tension spring which is constructed as a stationary antenna,
wherein at least one co-rotatable antenna is constructed with the sealing ring for transmitting and/or receiving high frequency,
wherein the co-rotatable antenna is constructed in such a way that the transmission and/or reception of high frequency may be carried out at least for transmitting energy for supplying a rotatable sensor which is electrically connected to the rotatable antenna,
and wherein the stationary antenna is constructed in such a way that the transmission and/or reception of high frequency may be carried out for transmitting information at least from a first electronic circuit which is electrically connected to the stationary antenna,
and wherein measured values of physical variables belong to the information, said measured values being picked up by the sensor.

2. A sealing ring according to Claim 1,
**characterised in that** the co-rotatable antenna is electrically connected to a surface wave sensor and is mounted directly on a rotatable shaft or such that it is integrated in a component rotating with the shaft and the stationary antenna is electrically connected to a first electronic circuit and integrated in a component which is suitably configured for transmitting and/or receiving high frequency, particularly 100 MHz to 10 GHz.

3. A method for process control,
**characterised in that**,
on a drive comprising a gear and a motor, at least one physical variable, such as the torque, transverse force or the like, is measured on a rotatable part, such as a shaft or the like, by means of a co-rotatable sensor,
wherein the drive comprises at least one sealing ring according to Claim 1, which is composed of a plurality of parts, particularly metal and/or electrically insulating parts,
wherein
- the sensor is supplied in contactless manner with energy for carrying out the measuring procedure,
- the measurement result is transmitted as information in contactless manner at least from the sensor to a stationary first electronic circuit with antenna,
- the process is influenced and/or controlled as a function of this measurement
- and at least one component or a part thereof is used as an antenna or at least as part of an antenna for transmitting and/or receiving high frequency.

4. A method for diagnosis,
**characterised in that**,
on a drive comprising a gear and a motor, at least one physical variable, such as the torque, transverse force or the like, is measured on a rotatable part, such as a shaft or the like, by means of a co-rotatable sensor,
the drive comprising at least one sealing ring according to Claim 1, which is composed of a plurality of parts, particularly metal and/or electrically insulating parts,
wherein
- the sensor is supplied in contactless manner with energy for carrying out the measuring procedure,
- the measurement result is transmitted as information in contactless manner at least from the sensor to a stationary first electronic circuit with antenna,
- the measurement data are used for diagnosis and/or for controlling display means according to the measurement data,
- and at least one component or a part thereof is used as an antenna or at least as part of an antenna for transmitting and/or receiving high frequency.

5. A method according to at least one of Claims 3 and 4,
**characterised in that**
the first electronic circuit is connected by way of a field bus and/or another system serving the network of a plurality of users to further electronic circuits and/or users or field bus users, such as central processors or the like, an emergency shutdown being triggered if critical values of the physical variable are exceeded.

6. A series of devices, particularly of gears or motors, having at least one rotating part, particularly a rotating shaft,
wherein the series comprises at least two sizes,
**characterised in that**
the series in at least one size comprises devices of which at least one shaft sealing ring is replaced by a shaft sealing ring according to Claim 1,
the same shaft sealing ring may be replaced in at least two sizes of the series or this shaft sealing ring has
- the same antenna,
- the same tension spring,
- the same reinforcing ring,
- or the same connecting lines.

## Revendications

1. Bague d'étanchéité, en particulier pour une boîte de vitesses ou un moteur,
la bague d'étanchéité présentant en tant que composant un ressort de traction qui est formé comme une antenne stationnaire,
au moins une antenne tournante étant conçue pour l'émission et/ou la réception de haute fréquence avec la bague d'étanchéité,
l'antenne tournante étant conçue de telle manière que l'émission et/ou la réception de haute fréquence soient réalisables au moins pour la transmission d'énergie pour l'alimentation d'un capteur tournant électriquement relié à l'antenne tournante,
l'antenne stationnaire étant conçue de telle manière que l'émission et/ou la réception de haute fréquence soient réalisables pour la transmission d'information au moins d'un premier circuit électronique électriquement relié à l'antenne stationnaire,
et des valeurs de mesure de grandeurs physiques recueillies au moyen du capteur faisant partie de l'information.

2. Bague d'étanchéité selon la revendication 1,
**caractérisée par le fait que**
l'antenne tournante est électriquement reliée à un capteur à ondes de surface et directement montée sur un arbre tournant ou intégrée dans un composant tournant avec l'arbre et
l'antenne stationnaire est électriquement reliée à un premier circuit électronique et intégrée dans un composant qui est conçu pour l'émission et/ou la réception de haute fréquence, en particulier de 100 MHz à 10 GHz.

3. Procédé pour la commande de processus,
**caractérisé par le fait**
**que** l'on mesure sur un entraînement, comprenant une boîte de vitesses et un moteur, au moins une grandeur physique, comme le couple de rotation, la force transversale ou analogue, sur une pièce tournante, comme un arbre ou analogue, au moyen d'un capteur tournant avec elle,
l'entraînement comprenant au moins une bague d'étanchéité selon la revendication 1 qui est composée de plusieurs pièces, en particulier de pièces métalliques et/ou électriquement isolantes,
- le capteur étant alimenté sans contact en énergie pour la réalisation de la prise de mesure,
- le résultat de mesure étant transmis comme information sans contact au moins par le capteur à un premier circuit électronique stationnaire avec antenne,
- le processus étant influencé et/ou commandé en fonction de cette mesure,
- et au moins un composant ou une pièce de celui-ci étant utilisé comme antenne ou au moins comme partie d'une antenne pour l'émission et/ou la réception de haute fréquence.

4. Procédé pour le diagnostic,
**caractérisé par le fait que**
que l'on mesure sur un entraînement, comprenant une boîte de vitesses et un moteur, au moins une grandeur physique, comme le couple de rotation, la force transversale ou analogue, sur une pièce tournante, comme un arbre ou analogue, au moyen d'un capteur tournant avec elle,
l'entraînement comprenant au moins une bague d'étanchéité selon la revendication 1 qui est composée de plusieurs pièces, en particulier de pièces métalliques et/ou électriquement isolantes,
- le capteur étant alimenté sans contact en énergie pour la réalisation de la prise de mesure,
- le résultat de mesure étant transmis comme information sans contact au moins par le capteur à un premier circuit électronique stationnaire avec antenne,
- les données de mesure étant utilisées pour le diagnostic et/ou pour la commande de moyens d'affichage en fonction des données de mesure,
- et au moins un composant ou une pièce de celui-ci étant utilisé comme antenne ou au moins comme partie d'une antenne pour l'émission et/ou la réception de haute fréquence.

5. Procédé selon au moins l'une des revendications 3 ou 4,
**caractérisé par le fait que**
le premier circuit électronique est relié par un bus de terrain et/ou un autre système servant à la mise en réseau de plusieurs participants à d'autres circuits électroniques et/ou participants ou participants au bus de terrain, comme un ordinateur central ou analogue, un arrêt d'urgence étant déclenché en cas de dépassement de valeurs critiques des grandeurs physiques.

6. Série de dispositifs, en particulier de boîtes de vitesses ou de moteurs,
avec au moins une pièce tournante, en particulier un arbre tournant,
la série comprenant au moins deux tailles de construction,
**caractérisée par le fait que**
la série comprend en au moins une taille de construction des dispositifs dont au moins une bague d'étanchéité d'arbre est remplacée par au moins une bague d'étanchéité d'arbre selon la revendication 1,
la même bague d'étanchéité d'arbre est utilisable dans au moins deux tailles de construction ou celle-ci présente
- la même antenne,
- le même ressort de traction,
- la même bague de renfort
- ou les mêmes lignes de raccordement.
